# EUROPEAN PATENT SPECIFICATION

(11) **EP 3 952 004 B1**
(45) Date of publication and mention of the grant of the patent: **04.12.2024**
(21) Application number: 20832295.8
(22) Date of filing: 25.05.2020
(51) Int. Cl.: H01M 10/48, H01M 50/502, H01M 50/284, H01M 50/209, H01M 50/15, H01M 50/569

(54) **BATTERY MODULE AND DEVICE**
BATTERIEMODUL UND VORRICHTUNG
MODULE DE BATTERIE ET DISPOSITIF

(30) Priority: 28.06.2019 CN 201910575261
(43) Date of publication of application: 09.02.2022
(73) Proprietor: Contemporary Amperex Technology (Hong Kong) Limited, Central, Central And Western District (HK)
(72) Inventor: CAO, Gen, Ningde, Fujian 352100 (CN)
(74) Representative: Patrade A/S
(86) International application number: PCT/CN2020/092179
(87) International publication number: WO 2020/259173

(56) References cited:
- CN-A- 104 466 067
- CN-A- 107 810 567
- CN-U- 203 503 754
- CN-U- 204 243 121
- CN-U- 205 960 151
- CN-U- 207 183 457
- US-A1- 2015 064 524
- US-A1- 2016 156 002
- US-A1- 2016 204 481
- US-B2- 8 802 275

## Description

### Technical Field

The present application relates to the technical field of batteries, in particular to a battery module and a device.

### Background

Temperature is an important parameter of a battery module, and directly influences safety of the battery module and charging and discharging strategy of the battery module. Therefore, temperature sampling is of great significance to the battery module.

In the battery module, compared with temperatures of other parts like a bus bar, a temperature of a top cover of a battery is closer to an actual temperature inside the battery, and the difference between the temperature of the top cover and the temperature inside the battery under severe working conditions is also within an acceptable range, therefore, to improve accuracy in collection of temperature of the battery module, one method adopted currently is to collect the temperature of the top cover.

However, in the prior art, the tightness and stability of contact between a temperature sensor for detecting the temperature of the top cover and the top cover are both poor, thereby not only influencing accuracy of results of temperature collection, but also easily leading to undetectability.

US2016204481A1 disclose a secondary battery includes at least one battery cell, a temperature sensor that detects information regarding a temperature of the battery cell, a protective circuit that receives temperature information output from the temperature sensor, and a sensor holder that accommodates the temperature sensor, the sensor holder including a first part formed at a side of the sensor holder and fixed to the protective circuit and a second part formed at another side of the sensor holder and pushed against the battery cell.

### Summary of the Invention

A technical problem to be solved in the present application is to improve accuracy in temperature collection of a battery module.

To solve the above technical problem, embodiments of the present application provide a battery module, and the battery module includes:
at least two batteries, wherein the batteries are arranged side by side and each battery includes a top cover and an electrode terminal arranged on the top cover; a bus bar, connecting electrode terminals of adjacent batteries; a circuit board, arranged above at least two batteries; and at least one temperature collection unit including a temperature collection structure and a bearing structure, wherein the temperature collection structure includes a temperature sensor and a thermal conducting pad, the temperature sensor collects temperature of the top cover and is arranged on the bearing structure, the thermal conducting pad is arranged between the temperature sensor and the top cover, and the bearing structure electrically connects the temperature sensor and the circuit board, and presses, under an effect of at least one of the circuit board and the bus bar, the temperature collection structure to be abutted against the top cover.

In some embodiments, the bearing structure is clamped with the bus bar.

In some embodiments, the bearing structure includes a bearing body, the temperature sensor is arranged on the bearing body, and the bearing body is provided with a first clamping structure, the bus bar is provided with a second clamping structure, and the first clamping structure is matched with the second clamping structure.

In some embodiments, the second clamping structure includes an installation groove, the bearing body is accommodated in the installation groove, and the first clamping structure includes a clamping groove, and a wall of the installation groove is clamped into the clamping groove.

In some embodiments, the first clamping structure further includes a buckle, the second clamping structure further includes a limiting opening formed on the wall of the installation groove, and the buckle is clamped into the limiting opening.

In some embodiments, the bearing structure is provided with a limiting groove, and the temperature sensor is arranged in the limiting groove.

In some embodiments, the bearing structure includes a bearing body and an elastic sheet, wherein the temperature sensor and the elastic sheet are both arranged on the bearing body, and the elastic sheet is arranged above the temperature sensor.

In some embodiments, the elastic sheet is provided with a first end and a second end which are opposite to each other, wherein the first end is electrically connected with the circuit board, and the second end is electrically connected with the temperature sensor.

In some embodiments, the battery module further includes a metal sheet arranged on the circuit board, and the first end is electrically connected with the circuit board through the metal sheet.

In some embodiments, the first end is concave downwards and is arc-shaped, and the metal sheet is inserted between a lower surface of the first end and the bearing body.

In some embodiments, a gap is formed between the lower surface of the first end and the bearing body, and the gap is smaller than or equal to the thickness of the metal sheet.

In some embodiments, the first end is provided with one of a convex part and a concave part, the metal sheet is provided with the other one of the convex part and the concave part, and the convex part is clamped with the concave part.

In some embodiments, the elastic sheet is arranged inside the bearing body, and an upper surface of the bearing body is provided with an opening for exposing the first end.

In some embodiments, a limiting groove arranged on the bearing body exposes the second end, and the second end is welded with the temperature sensor arranged in the limiting groove.

In some embodiments, the temperature collection unit includes two elastic sheets, and the second ends of the two elastic sheets are respectively electrically connected with a positive electrode and a negative electrode of the temperature sensor.

In some embodiments, a thickness of the thermal conducting pad at an original state is greater than a distance between a lower surface of the temperature sensor and the top cover.

In some embodiments, the battery further includes a top patch affixed to an upper surface of the top cover, the top patch is provided with a sampling hole for exposing the top cover, and the temperature collection structure is in contact with the top cover through the sampling hole.

In some embodiments, the sampling hole is arranged to be adjacent to a negative electrode terminal of the battery.

In some embodiments, the circuit board is a flexible circuit board, and/or, the temperature sensor is NTC.

Embodiments of the present application further provide a device including the battery module in the above embodiments, and the battery module is configured to provide electric energy.

In the present application, the bearing structure can press, under the effect of one of the circuit board and the bus bar, the temperature collection structure including the temperature sensor to be abutted against the top cover, therefore, the temperature collection structure can be in closer contact with the top cover, which is beneficial for improving accuracy in temperature collection of the battery module.

Other characteristics and advantages of the present application will become clear through a detailed description of the exemplary embodiments of the present application with reference to the accompanying drawings below.

### Brief Description of the Drawings

Fig. 1 is a three-dimensional diagram of part of a battery module of an embodiment in the present application;
Fig. 2 is a top view of Fig. 1;
Fig. 3 is a sectional view of E-E of Fig. 2;
Fig. 4 is a structural schematic diagram of a battery in Fig. 1;
Fig. 5 is a schematic diagram of a combined structure of a circuit board assembly, a temperature collection unit and a bus bar in Fig. 1;
Fig. 6 is a three-dimensional schematic diagram of a temperature collection unit in Fig. 5;
Fig. 7 is an exploded view of a thermal conducting pad, a temperature sensor and a bearing structure in Fig. 6;
Fig. 8 is a schematic diagram of a three-dimensional structure of a bearing structure;
Fig. 9 is a bottom view of Fig. 8;
Fig. 10 is a sectional view of A-A of Fig. 8;
Fig. 11 is a structural schematic diagram of an elastic sheet;
Fig. 12 is a schematic diagram of a positional relationship between a limiting hole and a second end of the elastic sheet;
Fig. 13 is a rear view of Fig. 8;
Fig. 14 is a structural schematic diagram of a bus bar in Fig. 5;
Fig. 15 is a schematic diagram of a bus bar and a temperature collection unit;
Fig. 16 is a sectional view of B-B of Fig. 15;
Fig. 17 is a structural schematic diagram of a circuit board assembly in Fig. 1;
Fig. 18 is a partial enlarged view of C of Fig. 17;
Fig. 19 is a match schematic diagram between a concave part on a metal sheet and a convex part on the elastic sheet;
Fig. 20 is a schematic diagram of an assembly process of the temperature collection unit and the bus bar;
Fig. 21 is a schematic diagram of an assembly process of a combined structure of a temperature collection unit and a bus bar and a circuit board assembly.

In the drawings:
100: battery module;
1: temperature collection unit; 2: bus bar; 3: circuit board; 4: metal sheet; 5: battery;
11: temperature sensor; 12: thermal conducting pad; 13: bearing structure;
131: bearing body; 133: elastic sheet; 13a: limiting groove; 13b: clamping groove; 13c: buckle; 13d: opening; 13e: opening bottom wall; 13f: opening side wall; 133a: first end; 133b: second end; 133c: convex part;
21: installation groove; 22: limiting opening;
41: concave part;
51: top patch; 52: top cover; 53: sampling hole; 54: positive electrode terminal; 55: negative electrode terminal.

### Detailed Description of the Embodiments

A clear and complete description will be given below on the technical solutions in the embodiments of the present application in combination with accompanying drawings in the embodiments of the present application, and apparently the embodiments described below are only a part but not all of the embodiments of the present application. The description of at least one exemplary embodiment below is actually merely illustrative, rather than serving as any limitation to the present application and its applications or uses. Based upon the embodiments of the present application, all the other embodiments which can occur to those skilled in the art without any inventive effort shall all fall into the protection scope of the present application.

The techniques, methods and devices well known to those of ordinary skills in the art may not be discussed in detail, however, under appropriate conditions, the description of techniques, methods and devices shall be deemed as a part of the authorized description.

In the description of the present application, it should be understood that, the use of such words as "first" and "second" to define parts is merely to facilitate distinguishment of corresponding parts, unless otherwise stated, the above words have no special meanings, and should not be understood as a limitation to the protection scope of the present application.

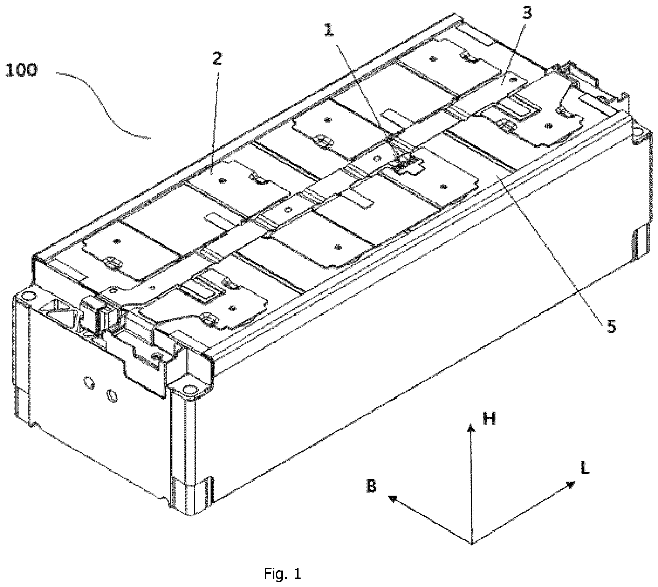

In the description of the present application, it should be understood that, the orientation or positional relationship indicated by such terms as "front, rear, up, down, left, right" "lateral, longitudinal, vertical, horizontal", and "top, bottom" is generally based on the orientation and position when the battery module in Fig. 1 is normally placed. Such terms are merely for the convenience of description of the present application and simplified description, rather than indicating or implying that the device or element referred to must be located in a certain orientation or must be constructed or operated in a certain orientation without a statement to the contrary, therefore, the terms cannot be understood as a limitation to the protection scope of the present application; and such orientation terms as "inner, outside" mean inner or outside relative to the contour of each part itself.

In addition, technical features involved in different embodiments of the present application described below can be combined with each other as long as they are not in conflict with each other.

Figs. 1-21 show one embodiment of a battery module of the present application. Please refer to Figs. 1-21, the battery module 100 provided in the present application includes:
at least two batteries 5, the batteries 5 are arranged side by side and each battery 5 includes a top cover 52 and an electrode terminal arranged on the top cover 52;
a bus bar 2, connecting electrode terminals of adjacent batteries 5;
a circuit board 3, arranged above all the batteries 5; and
at least one temperature collection unit 1, including a temperature collection structure and a bearing structure 13, the temperature collection structure includes a temperature sensor 11, the temperature sensor 11 collects temperature of the top cover 52 and is arranged on the bearing structure 13, and the bearing structure 13 electrically connects the temperature sensor 11 and the circuit board 3, and presses, under an effect of at least one of the circuit board 3 and the bus bar 2, the temperature collection structure to be abutted against the top cover 52.

In the existing temperature collection solution of the top cover of a battery, the temperature sensor is generally arranged on a harness plate of the battery module, and the problems lie in that, on the one hand, a contact between the temperature sensor and the top cover is not so tight, and on the other hand, the solution is merely applicable to the battery module with a harness plate, but not applicable to the battery module with no harness plate.

While in embodiments of the present application, the bearing structure 13 is added, and the bearing structure 13 is configured to press, under the effect of a circuit board 3 and/or a bus bar 2, the temperature collection structure including the temperature sensor 11 to be abutted against the top cover 52 of the battery 5, then not only the temperature collection structure can be in closer contact with the top cover 52, thereby realizing a more accurate collection of the temperature of the battery module 100, but also the temperature collection solution of the top cover no longer relies on the harness plate, thereby effectively enlarging the application range of the temperature collection solution of the top cover, and expanding the application range of the temperature collection solution of the top cover from only the battery module with the harness plate to the battery module with no harness plate.

In embodiments of the present application, in order to enable the bearing structure 13 to press, under the effect of the bus bar 2, the temperature collection structure to be abutted against the top cover 22, the bearing structure 13 may be connected to the bus bar 2. In this way, the bus bar 2 can exert a pressing effect onto the temperature collection structure through the bearing structure 13, and the temperature collection structure can then be in closer contact with the top cover 52. Meanwhile, by connecting the bearing structure 13 to the bus bar 2, the temperature collection structure can be further fixed reliably, which is beneficial for improving the stability of contact between the temperature collection structure and the top cover 52, and is further beneficial for improving accuracy of results of temperature collection of the top cover.

The bearing structure 13 can be connected with the bus bar 2 in a plurality of manners. For example, in some embodiments, the bearing structure 13 can be in threaded connection with the bus bar 2; for another example, in some other embodiments, the bearing structure 13 can be clamped with the bus bar 2.

In addition, to improve the stability of contact between the temperature collection structure and the top cover 52, other manners can also be adopted except the manner of connecting the bearing structure 13 onto the bus bar 2. For example, a limiting groove 13a may be arranged on the bearing structure 13, and the temperature sensor 11 may be arranged in the limiting groove 13a. In this way, not only a bearing function of the bearing structure 13 to the temperature sensor 11 can be realized, but also a limiting function to the temperature sensor 11 can be realized by the limiting groove 13a, such that the temperature collection structure can be more stably kept at an anticipated position at which the temperature collection structure is in contact with the top cover 52, so as to prevent the risk of incapability in collecting temperature of the top cover when the temperature sensor 11 is displaced under such working conditions as shock or vibration.

To enhance the pressing effect to the temperature collection structure, in embodiments of the present application, the bearing structure 13 includes a bearing body 131 and an elastic sheet 133, the temperature sensor 11 and the elastic sheet 133 are both arranged on the bearing body 131, and the elastic sheet 133 is arranged above the temperature sensor 11. Based on this, the bearing structure 13 can not only transfer the pressing effect of the circuit board 3 and/or the bus bar 2, meanwhile the bearing structure 13 itself can also exert a pressing effect onto the temperature sensor 11 through the elastic sheet 133 , therefore, the temperature collection structure can be in more reliable contact with the top cover 52, thereby realizing a more accurate temperature collection process.

Moreover, when the bearing structure 13 includes the elastic sheet 133, the elastic sheet 133 may further be configured to realize electrical connection between the temperature sensor 11 and the circuit board 3, then a part which electrically connects the temperature sensor 11 and the circuit board 3 does not need to be set additionally, therefore, the structure is simple and compact. At this time, the number of the elastic sheets 133 may be set to be two, the two elastic sheets 133 are respectively electrically connected with a positive electrode and a negative electrode of the temperature sensor 11, and are both electrically connected with the circuit board 3, so as to realize electrical connection between the temperature sensor 11 and the circuit board 3, such that temperature signals collected by the temperature sensor 11 can be smoothly transferred to the circuit board 3, then the circuit board 3 can further transfer the temperature signals to the battery management system (BMS), to serve as a basis for the BMS to control battery security, charging and discharging strategy of the battery, and traffic safety, etc.

In embodiments of the present application, the temperature collection structure may further include a thermal conducting pad 12 while including a temperature sensor 11, and the thermal conducting pad 12 is arranged between the temperature sensor 11 and the top cover 52. Under this condition, the temperature sensor 11 is in contact with the top cover 52 through the thermal conducting pad 12, and the thermal conducting pad 12 can transfer the temperature of the top cover 52 to the temperature sensor 11. Since the thermal conducting pad 12 has a certain deformability, when the bearing structure 13 exerts a pressing effect onto the temperature collection structure, the thermal conducting pad 12 can deform favorably, to realize closer contact with the top cover 52.

The present application will be further illustrated below in combination with the embodiment shown in Figs. 1-21.

As shown in Figs. 1-21, in the present embodiment, the battery module 100 includes a battery 5, a bus bar 2, a circuit board 3 and a temperature collection unit 1.

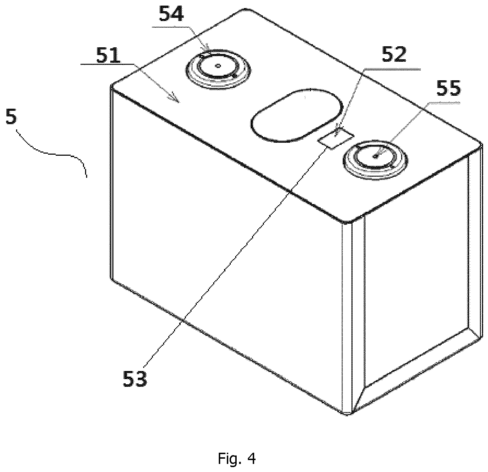

As shown in Fig. 1, a plurality of batteries 5 are arranged side by side along a length direction (the L direction in Fig. 1) of the battery module 100, moreover, as shown in Fig. 4, each battery 5 includes a top cover 52, a top patch 51, a positive electrode terminal 54 and a negative electrode terminal 55. The top patch 51 is affixed to an upper surface of the top cover 52, to shield the top cover 52, thereby on the one hand playing an effect of insulation to prevent short circuit between the top cover 52 and an external circuit, and on the other hand playing a role of protection to prevent the top cover 52 from being scratched; and the positive electrode terminal 54 and the negative electrode terminal 55 extend upwards to the outside of the top patch 51 to be electrically connected with the external circuit.

It can be known from Fig. 4 that, to facilitate collection of the temperature of the top cover 52, in the present embodiment, the top patch 51 is provided with a sampling hole 53, and the sampling hole 53 is a through hole, therefore, the sampling hole 53 can remove shielding of a corresponding part of the top patch 51 to the top cover 52, such that the corresponding part of the top cover 52 is exposed, that is, the sampling hole 53 can expose the top cover 52, in this way, the temperature collection structure of the temperature collection unit 1 can stretch into the sampling hole 53, and is in contact with the top cover 52 at the sampling hole 53, then realizing collection of the temperature of the top cover 52. As can be seen, by setting the sampling hole 53, it's convenient for the temperature collection structure to be close to the top cover 52.

Although a difference still exists between a surface temperature of the top cover 52 and the internal temperature of the battery 5, a synchronization between the surface temperature of the top cover 52 and the internal temperature of the battery 5 is higher, and an error is within an acceptable range, meanwhile, the surface temperature of the top cover 52 is little influenced by a change in system current, therefore, the internal temperature of the battery 5 can be accurately restored through collecting the surface temperature of the top cover 52 and fitting the internal temperature of the battery 5 based on the surface temperature of the top cover 52, especially relative to the solution in which the temperature of other parts like a bus bar 2 is collected, more accurate results of temperature collection can be obtained.

As shown in Fig. 4, the sampling hole 53 of the present embodiment is arranged between the positive electrode terminal 54 and the negative electrode terminal 55, and is more adjacent to the negative electrode terminal 55. For the same battery 5, relative to the other parts, a temperature at the negative electrode terminal 55 is closer to the internal temperature of the battery 1, therefore, in the present embodiment, the sampling hole 53 being set to be adjacent to the negative electrode terminal 55 is also beneficial for improving accuracy of temperature collection.

The bus bar 2 (also known as Busbar or electrical connecting sheet) is configured to connect electrode terminals of adjacent batteries 5, to electrically connect adjacent batteries 5, and realize series and parallel connection of a plurality of batteries 5.

The circuit board 3 above all the batteries 5 is internally provided with a circuit, and is configured to electrically connect the temperature sensor 11 and the battery management system (BMS). Based on this, the temperature signals collected by the temperature collection structure can be transferred to the BMS via the circuit board 3.

The circuit board 3 may be a PCB board (Printed Circuit Board) or a FPC board (Flexible Printed Circuit Board). The PCB board is high in rigidity and hardness, while the FPC board is high in flexibility and low in hardness. In the present embodiment, the circuit board 3 being an FPC board is taken as an example. The FPC board is also called a flexible circuit board, and is a printed circuit board which is manufactured with polyimide or polyester film as a base material and which has high reliability and excellent flexibility, and the FPC board is characterized by high wiring density, light weight, thin thickness and good bending.

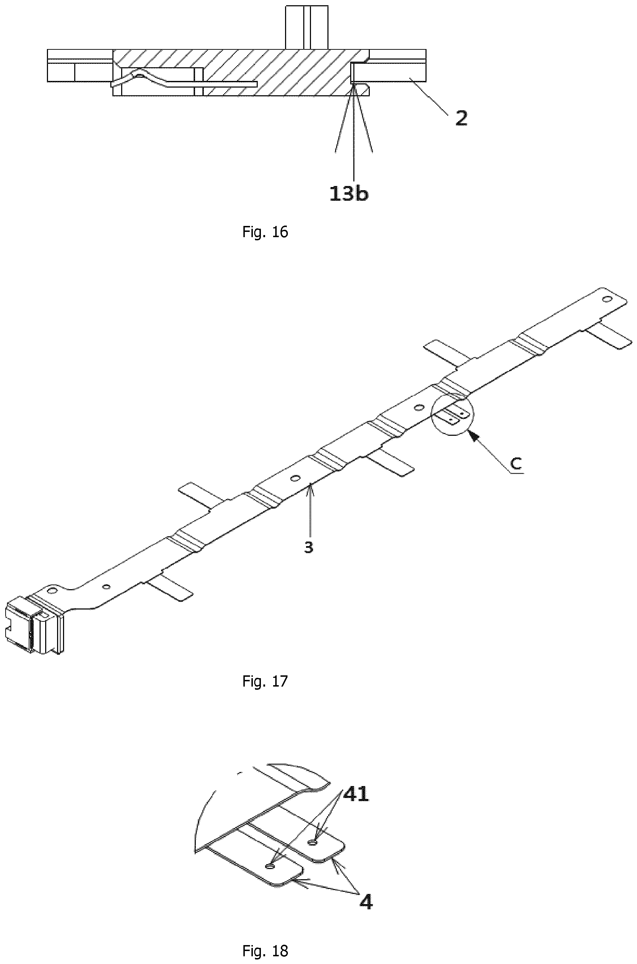

Moreover, as shown in Fig. 17 and Fig. 18, in the present embodiment, to facilitate electrical connection between the circuit board 3 and the temperature sensor 11, the circuit board 3 is further provided with a metal sheet 4, and the circuit board 3 is electrically connected with the temperature sensor 11 through the metal sheet 4. In this way, the metal sheet 4 and the circuit board 3 are combined to form a circuit board assembly.

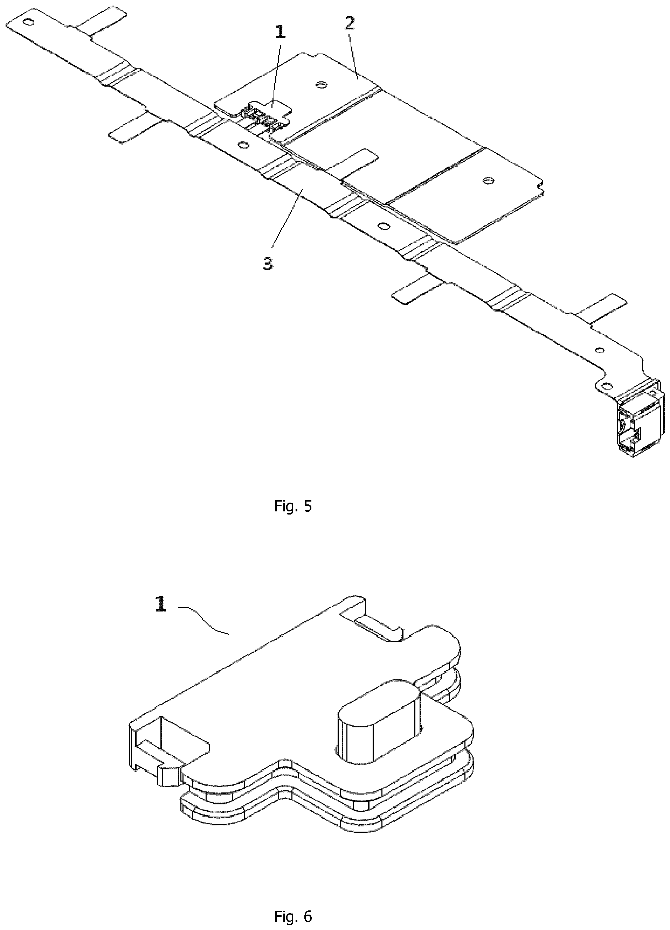

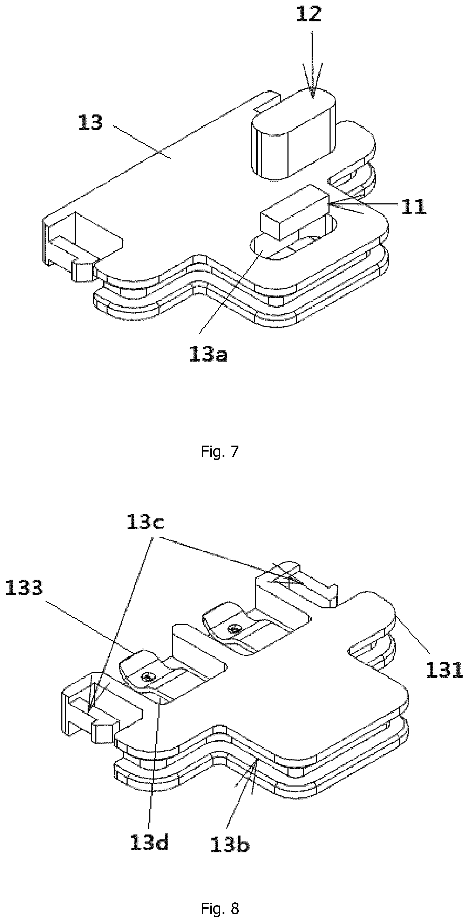

The temperature collection unit 1 is configured to collect the temperature of the top cover 52. As shown in Fig. 1, the battery module 100 only includes one temperature collection unit 1. Moreover, as shown in Fig. 6 and Fig. 7, to realize a function of temperature collection, in the present embodiment, the temperature collection unit 1 includes a temperature collection structure which is provided with a temperature sensor 11 and a thermal conducting pad 12; meanwhile, to fix the temperature collection structure, and to realize sufficient contact between the temperature collection structure and the top cover 52, in the present embodiment, the temperature collection unit 1 further includes a bearing structure 13, and the bearing structure 13 is configured to bear the temperature collection structure and press the temperature collection structure to be abutted against the top cover 52.

The temperature sensor 11 is configured to collect the temperature and transfer the temperature detection results to the circuit board 3. In the present embodiment, the temperature sensor 11 is NTC (Negative Temperature Coefficient), that is, a thermal resistor with negative temperature coefficient, and a resistance decreases exponentially along with a rise in temperature. As an alternative, the temperature sensor 11 may also adopt other structural forms like a platinum thermistor.

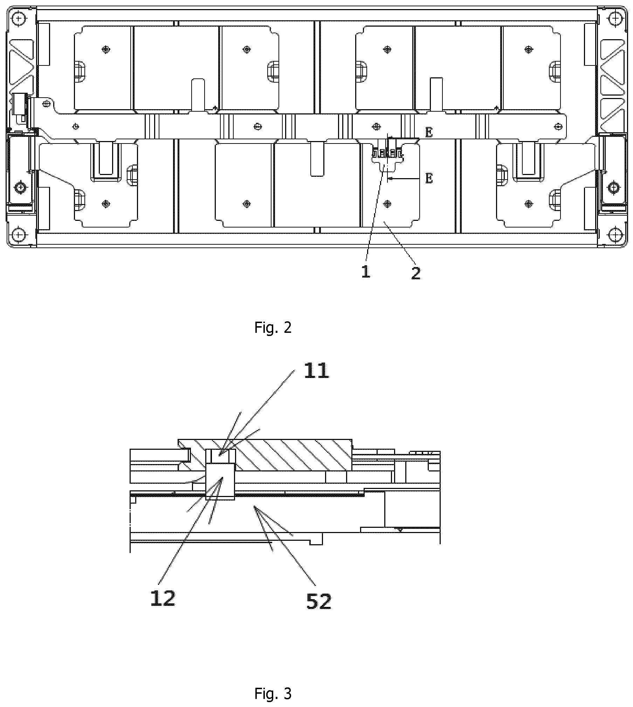

As shown in Fig. 2 and Fig. 3, in the present embodiment, the temperature sensor 11 is not in direct contact with the top cover 52, but is in contact with the top cover 52 through the thermal conducting pad 12.

The thermal conducting pad 12 is arranged between the temperature sensor 11 and the top cover 52, an upper surface of the thermal conducting pad 12 is in contact with a lower surface of the temperature sensor 11, and a lower surface of the thermal conducting pad 12 is in contact with the top cover 52, to transfer the temperature of the top cover 52 to the temperature sensor 11, and realize thermal conduction between the temperature sensor 11 and the top cover 52. The thermal conducting pad 12 may be connected with the temperature sensor 11 through such connecting manners as adhesive connection. The adhesive connection manner may be realized through coating thermal conductive adhesive between the thermal conducting pad 12 and the temperature sensor 11.

The thermal conducting pad 12 is of high thermal conductivity coefficient, high thermal conducting efficiency, good compression performance and strong bearing strength, and can bear extrusion of the EOL (End of Life) of the module during expansion deformation and impact vibration. Therefore, when the temperature sensor 11 is in contact with the top cover 52 through the thermal conducting pad 12, not only a more efficient temperature collection process can be realized, but also the contact sufficiency between the temperature collection structure and the top cover 52 can be improved, which is especially dramatic when the bearing structure 13 exerts a pressing effect onto the temperature collection structure.

Moreover, in the present embodiment, the thermal conducting pad 12 is set in such a way that a thickness of the thermal conducting pad 12 in an original state (that is, in an uncompressed state) is greater than a distance between the lower surface of the temperature sensor 11 and the top cover 52, to better match with the bearing structure 13 and be closely abutted against the top cover 52.

As shown in Fig. 1, the battery module 100 of the present embodiment does not include a harness plate, therefore, the temperature sensor 11 can no longer be arranged on the harness plate as what is done in the prior art, and the temperature sensor 11 can no longer be fixed by the harness plate. The bearing structure 13 arranged in the present embodiment can effectively solve the problem.

It can be known from Fig. 1, Fig. 3 and Fig. 5 that, in the present embodiment, the bearing structure 13 bears the temperature collection structure and is connected with both the bus bar 2 and the circuit board 3, and the bearing structure 13 includes a bearing body 131 and two elastic sheets 133.

The bearing body 131 provides an installation base for the temperature collection structure and the elastic sheet 133, and is connected with the bus bar 2, such that the connection between the bearing structure 13 and the bus bar 2 is realized, the temperature collection structure is fixed and limited, and the bearing structure 13 can press the temperature collection structure under the effect of the bus bar 2.

Specifically, as shown in Fig. 3, Fig. 6 and Fig. 7, in the present embodiment, a lower surface of the bearing body 131 is provided with a limiting groove 13a, and the temperature sensor 11 and the thermal conducting pad 12 are both arranged in the limiting groove 13a. In this way, the temperature collection structure is arranged on the bearing body 131, and the limiting groove 13a can play a certain limiting role on the temperature collection structure, to prevent unanticipated displacement of the temperature sensor 11 and the thermal conducting pad 12 under severe working conditions, which affects accuracy in temperature collection by affecting the contact between the temperature collection structure and the top cover 52. Meanwhile, the limiting groove 13a of the present embodiment further plays a role of facilitating electrical connection between the elastic sheet 133 and the temperature sensor 11, which will be illustrated in more details below in combination with the setting characteristics of the elastic sheet 133.

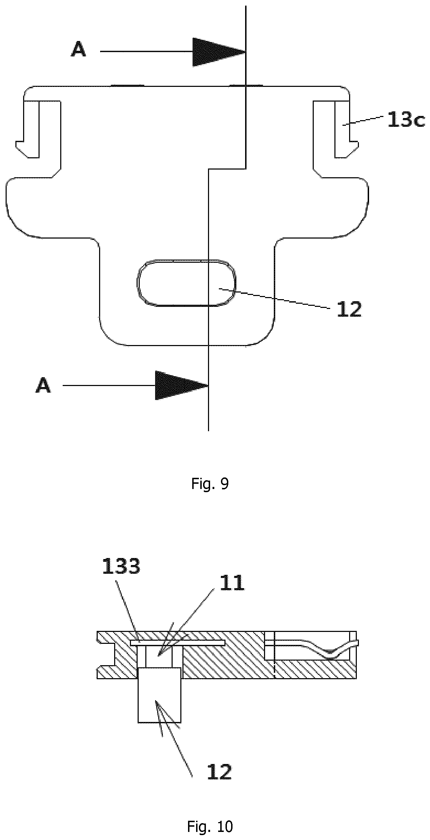

Moreover, as shown in Fig. 8 and Fig. 10, the bearing body 131 of the present embodiment is internally provided with an accommodating space, and the elastic sheets 133 are arranged in the accommodating space, that is, in the present embodiment, the elastic sheet 133 is arranged inside the bearing body 131. Based on this, the bearing body 131 can limit and fix the elastic sheet 133, and prevent the elastic sheet 133 from being damaged or reducing damage to the elastic sheet 133, meanwhile, the bearing body 131 can further exert a certain pressure onto the elastic sheet 133, which is beneficial for enhancing the pressing effect of the elastic sheet 133 on the temperature sensor 11.

To realize connection between the bearing body 131 and the bus bar 2, in the present embodiment, the bearing body 131 is provided with a first clamping structure, and the bus bar 2 is provided with a second clamping structure configured to be clamped with the first clamping structure, in this way, based on the match between the first clamping structure and the second clamping structure, the bearing body 131 is clamped with the bus bar 2.

The bearing body 131 is clamped onto the bus bar 2, such that the temperature collection unit 1 is entirely fixed by the bus bar 2, moreover, assembly is convenient, and fixation is reliable, displacement does not occur easily due to an external force, thereby improving reliability and stability of the contact between the temperature collection structure and the top cover 52. Meanwhile, the bus bar 2 can exert a pressing effect onto the temperature collection structure through the clamped bearing body 131, such that the temperature sensor 11 can be in closer contact with the top cover 52 through the thermal conducting pad 12, to improve the accuracy in temperature collection.

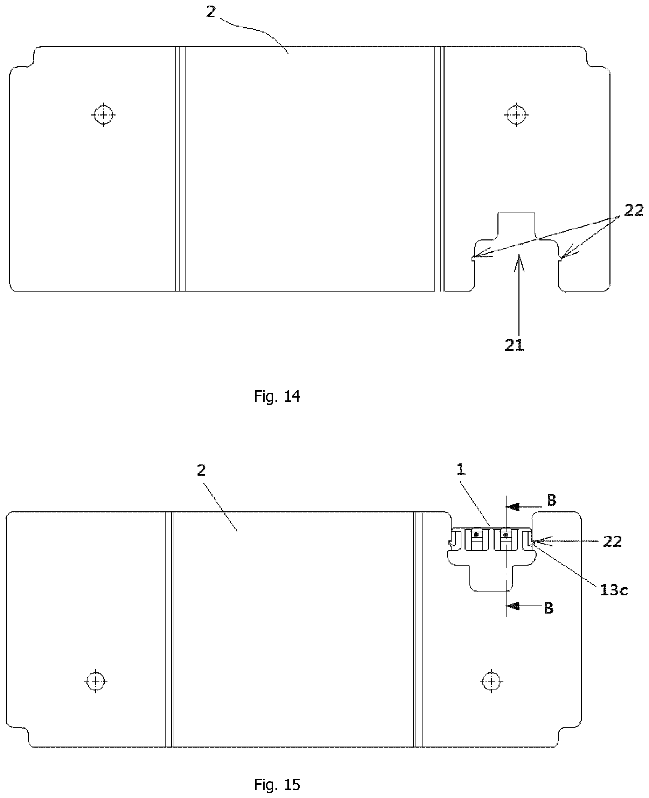

Specifically, as shown in Fig. 8 and Fig. 14, in the present embodiment, the first clamping structure includes a clamping groove 13b and a buckle 13c, and the second clamping structure includes an installation groove 21 and a limiting opening 22. The clamping groove 13b is matched with the installation groove 21, to limit up and down as well as left and right displacements of the bearing body 131; and the buckle 13c is matched with the limiting opening 22, to limit the front and rear displacements of the bearing body 31.

More specifically, as shown in Fig. 15 and Fig. 16, a shape of the installation groove 21 is matched with a shape of the bearing body 131, the bearing body 131 is accommodated in the installation groove 21, and the wall of the installation groove 21 is inserted into the clamping groove 13b, meanwhile, the limiting opening 22 is arranged on the wall of the installation groove 21, and the buckle 13c is clamped into the limiting opening 22.

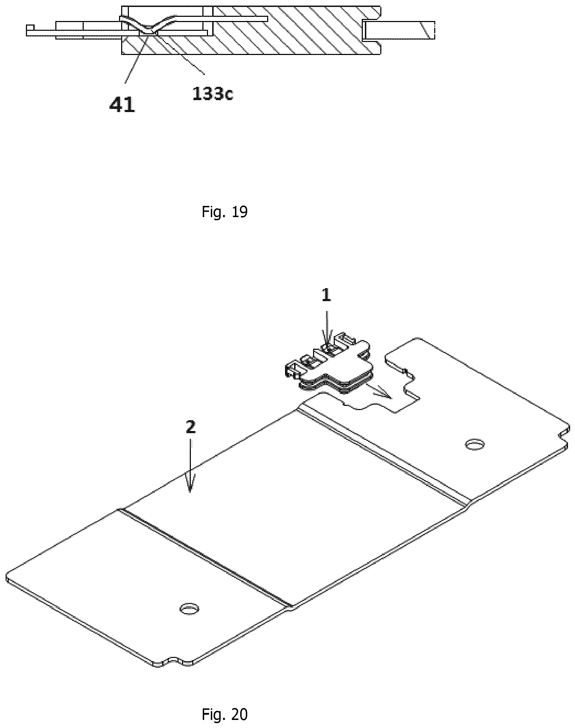

As can be known in combination with Fig. 15 and Fig. 20, in the present embodiment, the installation groove 21 and the bearing body 131 are generally shaped as a Chinese character "convex" along their assembly direction (as shown by an arrow in Fig. 20, which is also the direction from the circuit board 3 to the bus bar 2), in other words, the installation groove 21 and the bearing body 131 both include two rectangles with different sizes which are arranged along the assembly direction of the installation groove 21 and the bearing body 131 and are connected with each other, wherein the rectangle with a larger area is more adjacent to the circuit board 3 than the rectangle with a smaller area, that is, the area of the rectangle far away from the circuit board 3 is smaller than the area of the other rectangle adjacent to the circuit board 3.

In addition, as shown in Fig. 8, in the present embodiment, the clamping groove 13b is arranged between an upper surface and the lower surface of the bearing body 131, and is arranged at an edge of the bearing body 131; while the buckle 13c is arranged at a tail end (that is, the end adjacent to the circuit board 3) of the bearing body 131, and two buckles 13c are arranged at two sides, along a length direction of the battery module 100, of the bearing body 131, correspondingly, as shown in Fig. 14, the number of the limiting openings 22 is also two, and the two limiting openings 22 are respectively arranged at two opposite side walls, along the length direction of the battery module 100, of the installation groove 21.

The bearing body 131 of the present embodiment may be a plastic piece, and may be processed through an injection molding process. Since the bearing body 131 is a plastic piece, the bearing body 131 and the bus bar 2 are insulated from each other. It should be understood that, in other embodiments, the bearing body 131 may be made from insulating materials other than plastics.

The elastic sheet 133 is configured to electrically connect the temperature sensor 11 and the circuit board 3, and exert a pressing effect onto the temperature sensor 11, such that the bearing structure 13 itself also has a certain pushing and pressing effect on the temperature collection structure.

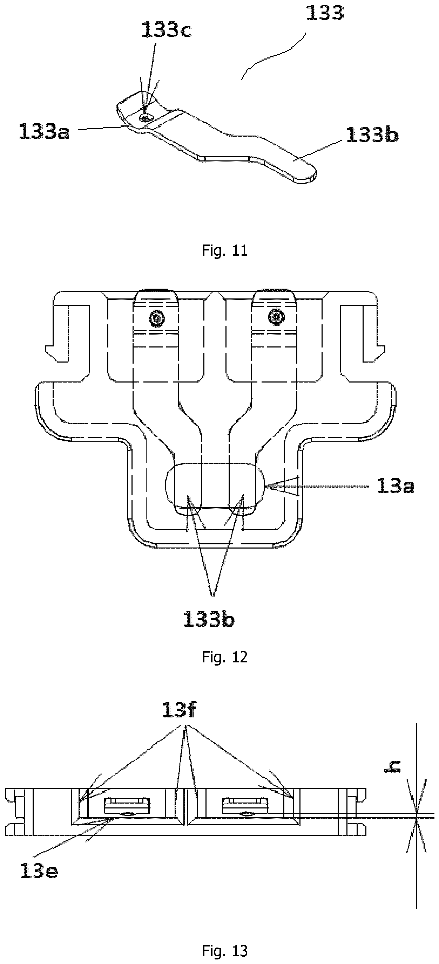

Specifically, as shown in Fig. 11, in the present embodiment, the elastic sheet 133 as a metal elastic sheet is arranged inside the bearing body 131, and is located above the temperature sensor 11, moreover, the elastic sheet 133 of the present embodiment is provided with a first end 133a and a second end 133b which are opposite to each other, the first end 133a is electrically connected with the circuit board 3, and the second end 133b is electrically connected with the temperature sensor 11. Based on this, the elastic sheet 133 can realize electrical connection between the temperature sensor 11 and the circuit board 3, such that the temperature signals detected by the temperature sensor 11 can be transferred to the circuit board 3 via the elastic sheet 133 and the metal sheet 4, thereby further making it easier for the battery management system to control safety and charging and discharging of the battery based on the detected temperature signals.

The first end 133a realizes electrical connection with the circuit board 3 through connection with the metal sheet 4. It can be known in combination with Fig. 11, Fig. 18 and Fig. 19 that, in the present embodiment, the first end 133a is provided with a protruding part 133c, the metal sheet 4 is provided with a concave part 41 matched with the convex part 133c, and the convex part 133c is buckled with the concave part 41. With the match between the convex part 133c and the concave part 41, the first end 133a is clamped with the metal sheet 4, assembly is simple, connection is reliable, and receding of the metal sheet 4 can be prevented. Of course, the positions of the convex part 133c and the concave part 41 may be interchanged, that is, the convex part 133c may be arranged on the metal sheet 4, and the concave part 41 may be arranged on the first end 133a, in fact, as long as one of the convex part 133c and the concave part 41is arranged on the first end 133a, and the other one of the convex part 133c and the concave part 41 is arranged on the metal sheet 4, the clamping between the first end 133a and the metal sheet 4 can be realized.

Meanwhile, as shown in Fig. 8 and Fig. 11, in the present embodiment, the first end 133a is concave downwards and is arc-shaped, and the metal sheet 4 is inserted between a lower surface of the first end 133a and the bearing body 131. Based on this, the elastic sheet 133 can effectively elastically press the metal sheet 4, which is beneficial for realizing closer contact and more reliable connection between the metal sheet 4 and the first end 133a.

Moreover, as shown in Fig. 13, in the present embodiment, a gap h exists between the lower surface of the first end 133a and the bearing body 131, and the gap h provides a space for inserting and pulling the metal sheet 4. The gap h may be set to be smaller than or equal to a thickness of the metal sheet 4, so as to enhance the elastic pression effect of the elastic sheet 133 on the metal sheet 4, thereby more effectively maintaining a good contact between the elastic sheet 133 and the metal sheet 4.

The first end 133a which is concave downwards and arc-shaped and the convex part 133c arranged on the first end 133a may be formed by stamping.

In addition, as can be seen from Fig. 8, an opening 13d for exposing the first end 133a is disposed on the upper surface of the bearing body 131 of the present embodiment, which not only facilitates deformation of the elastic sheet 133, thereby being beneficial for exerting a pressing effect by the elastic sheet 133 onto the temperature sensor 11, meanwhile, as shown in Fig. 13, a side wall of the opening 13a (marked as an opening side wall 13f in Fig. 13) and a bottom wall of the opening 13a (marked as an opening bottom wall 13e in Fig. 13) can also play a role of guiding and limiting the metal sheet 4 when the metal sheet 4 is inserted between the lower surface of the first end 133a and the bearing body 131, therefore, the setting of the opening 13a also facilitates insertion of the metal sheet 4.

The opening 13a is arranged corresponding to the elastic sheet 133, and two elastic sheets 133 are arranged in the present embodiment, therefore, the bearing body 131 is also correspondingly provided with two openings 13a.

In addition, in the present embodiment, the second end 133b is electrically connected with the temperature sensor 11 through welding with the temperature sensor 11. Moreover, the second ends 133b of the two elastic sheets 133 are respectively welded with the positive electrode and the negative electrode of the temperature sensor 11, so as to be respectively electrically connected with the positive electrode and the negative electrode of the temperature sensor 11. Specifically, as shown in Fig. 12, the above-mentioned limiting groove 13a arranged on the lower surface of the bearing body 131 is arranged below the second ends 133b of the two elastic sheets 133, and the bearing body 131 exposes the two second ends 133b, to realizing exposure of the two second ends 133b, thereby facilitating contact between the two second ends 133b and the temperature sensor 11, and further facilitating the welding between the two second ends 133b and the temperature sensor 11; meanwhile, it can be known from Fig. 11 and Fig. 12 that, in the present embodiment, the second end 133b is flat, such that the second end 133b can be in more sufficient contact with the temperature sensor 11, thereby being beneficial for realizing more reliable welding between the second end 133b and the temperature sensor 11.

A brief illustration will be given below on the assembly process of the battery module 100 of the present embodiment in combination with Fig. 1, Fig. 4, Fig. 7, Fig. 20 and Fig. 21 below:
Firstly, as shown in Fig. 7, the temperature sensor 11 is placed in the limiting groove 13a arranged on the bearing body 131, and the positive electrode and the negative electrode of the temperature sensor 11 are welded to the second ends 133b of the two elastic sheets 133, and then the thermal conducting pad 12 is pasted to the lower surface of the temperature sensor 11 to form a temperature collection unit 1.

Afterwards, as shown in Fig. 20, the temperature collection unit 1 is inserted into the installation groove 21 of the bus bar 2 according to the direction shown by the horizontal arrow in the figure, such that the wall of the installation groove 21 is clamped into the clamping groove 13b on the bearing body 131, and the buckle 13c on the bearing body 131 is clamped into the limiting opening 22 on the wall of the installation groove 21, thereby realizing fixation between the temperature collection unit 1 and the bus bar 2.

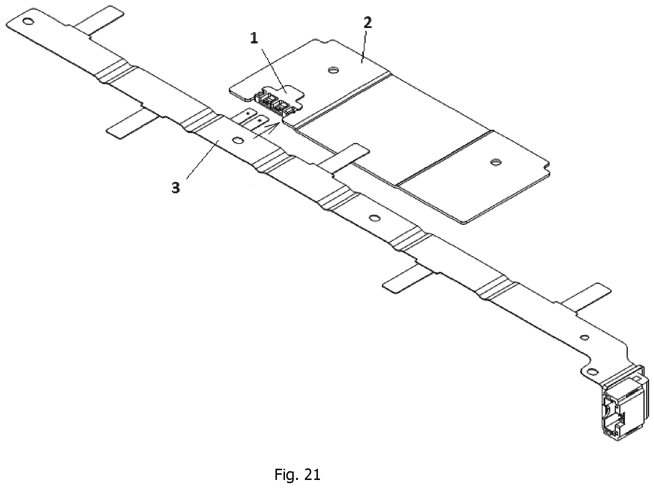

Then, as shown in Fig. 21, two metal sheets 4 on the circuit board 3 are inserted into the gap h between the lower surface of the first ends 133a of the two elastic sheets 133 and the bearing body 131 along the direction shown by the arrow in the figure, and the convex part 133c on the first end 133a is clamped into the concave part 41 on the metal sheet 4, to form a sampling assembly.

And then, as shown in Fig. 1 and Fig. 4, the sampling assembly is assembled to a semi-finished product of the battery module 100, and the bus bar 2 is welded onto the electrode terminal of the battery 5, to realize assembly of the sampling assembly and the semi-finished product of the battery module 100, and a housing can be further added subsequently to form a battery module 100.

In the above assembly process, when the bus bar 2 is welded onto the electrode terminal of the battery 5, the bus bar 2 can drive the bearing body 131 to press the thermal conducting pad 12 with the thickness being greater than the distance between the temperature sensor 11 and the top cover 52, such that the thermal conducting pad 12 is in close fit with the top cover 52, to form interference contact as shown in Fig. 3. It can be seen that, in the battery module 100 of the present embodiment, the bearing structure 13 can press the temperature collection structure towards the direction adjacent to the top cover 52 under the effect of the bus bar 2, as this can improve contact tightness and contact reliability between the top cover 52 and the temperature collection structure, the accuracy in temperature collection is higher then.

As can be seen in combination with the above, in the present embodiment, under the effect of the bus bar 2 and the bearing structure 13, the contact tightness and the long-term contact reliability between the temperature collection structure and the top cover 52 are both improved, even under such severe working conditions as shock and vibration, the temperature collection structure can still be in favorable contact with the top cover 52, therefore, a more accurate and reliable temperature collection process of the top cover can be realized.

Moreover, as to the battery module 100 of the present embodiment, a temperature collection path is as follows: the top cover 52-the thermal conducting pad 12-the temperature sensor 11-the elastic sheet 133-the metal sheet 4-the circuit board 3, which is a short thermal conducting path, with high temperature collection accuracy, and fast response speed.

In the above embodiment, although only one temperature collection unit 1 is shown in the figures, however, it should be noted that, the number of the temperature collection units 1 may also be two or more, such that the battery module 100 can have at least two temperature sampling points, thereby temperature collection of at least two sampling points being realized.

When a plurality of temperature collection units 1 are included, each temperature collection unit 1 is arranged on the batteries 5 at different positions along the length direction of the battery module 100. For example, along the length direction of the battery module 100, two batteries 5 at edges at two sides of the battery module 100 and the battery 5 in the middle position of the battery module 100 may be respectively provided with one temperature collection unit 1. The temperature of the batteries 5 at two sides is generally low, and the temperature of the battery 5 in the middle position is high, therefore, temperature collection units 1 arranged at these three points can more accurately collect the temperature of the entire battery module 100.

In addition, in the above embodiment, only the battery module 100 including no harness plate is taken as an example, which means to illustrate that the temperature collection solution of the top cover in the embodiments of the present application no longer relies on the harness plate, however, in fact, the solution of the embodiments of the present application is also applicable to the battery module 100 including a harness plate.

Embodiments of the present application further provide a device including the battery module described above, and the battery module is configured to provide electric energy. The device may be vehicles or energy-storage devices.

What is described above is merely exemplary embodiments of the present application, rather than for limiting the present application.

## Claims

1. A battery module, comprising:
at least two batteries (5) arranged side by side, and each battery (5) comprising a top cover (52) and an electrode terminal arranged on the top cover (52);
a bus bar (2), connecting electrode terminals of adjacent batteries (5);
a circuit board (3), arranged above the at least two batteries (5); and
at least one temperature collection unit (1), comprising a temperature collection structure and a bearing structure (13);
**characterized in that**,
the temperature collection structure comprises a temperature sensor (11) and a thermal conducting pad (12), the temperature sensor (11) collect temperature of the top cover (52) and is arranged on the bearing structure (13), the thermal conducting pad (12) is arranged between the temperature sensor (11) and the top cover (52) , and the bearing structure (13) electrically connects the temperature sensor (11) and the circuit board (3), and presses, under an effect of at least one of the circuit board (3) and the bus bar (2), the temperature collection structure to be abutted against the top cover (52).

2. The battery module as claimed in claim 1, **characterized in that** the bearing structure (13) is clamped with the bus bar (2).

3. The battery module as claimed in claim 1 or 2, **characterized in that** the bearing structure (13) comprises a bearing body (131), the temperature sensor (11) is arranged on the bearing body (131), and the bearing body (131) is provided with a first clamping structure, the bus bar (2) is provided with a second clamping structure, and the first clamping structure is matched with the second clamping structure.

4. The battery module as claimed in claim 3, **characterized in that** the second clamping structure comprises an installation groove (21), the bearing body (131) is accommodated in the installation groove (21), and the first clamping structure comprises a clamping groove (13b), and a wall of the installation groove (21) is clamped into the clamping groove (13b).

5. The battery module as claimed in claim 3 or 4, **characterized in that** the first clamping structure further comprises a buckle (13c), the second clamping structure further comprises a limiting opening (22) arranged on the wall of the installation groove (21), and the buckle (13c) is clamped into the limiting opening (22).

6. The battery module as claimed in any one of claims 1-5, **characterized in that** the bearing structure (13) is provided with a limiting groove (13a), and the temperature sensor (11) is arranged in the limiting groove (13a).

7. The battery module as claimed in any one of claims 1-6, **characterized in that** the bearing structure (13) comprises a bearing body (131) and an elastic sheet (133), wherein the temperature sensor (11) and the elastic sheet (133) are both arranged on the bearing body (131), and the elastic sheet (133) is arranged above the temperature sensor (11).

8. The battery module as claimed in claim 7, **characterized in that** the elastic sheet (133) is provided with a first end (133a) and a second end (133b) which are opposite to each other, wherein the first end (133a) is electrically connected with the circuit board (3), and the second end (133b) is electrically connected with the temperature sensor (11).

9. The battery module as claimed in claim 8, **characterized by** further comprising a metal sheet (4) arranged on the circuit board (3), and the first end (133a) is electrically connected with the circuit board (3) through the metal sheet (4).

10. The battery module as claimed in claim 9, **characterized in that** the first end (133a) is concave downwards and is arc-shaped, and the metal sheet (4) is inserted between a lower surface of the first end (133a) and the bearing body (131).

11. The battery module as claimed in claim 10, **characterized in that** a gap (h) is formed between the lower surface of the first end (133a) and the bearing body (131), and the gap (h) is smaller than or equal to a thickness of the metal sheet (4).

12. The battery module as claimed in any one of claims 9-11, **characterized in that** the first end (133a) is provided with one of a convex part (133c) and a concave part (41), the metal sheet (4) is provided with the other one of the convex part (133c) and the concave part (41), and the convex part (133c) is clamped with the concave part (41).

13. The battery module as claimed in any one of claims 8-12, **characterized in that** the elastic sheet (133) is arranged inside the bearing body (131), and an upper surface of the bearing body (131) is provided with an opening (13d) for exposing the first end (133a).

14. A device, **characterized by** comprising the battery module as claimed in any one of claims 1-13, wherein the battery module is configured to provide electric energy.

## Patentansprüche

1. Batteriemodul, umfassend:
mindestens zwei nebeneinander angeordnete Batterien (5), wobei jede Batterie (5) eine obere Abdeckung (52) und einen an der oberen Abdeckung (52) angeordneten Elektrodenanschluss umfasst;
eine Sammelschiene (2), die Elektrodenanschlüsse benachbarter Batterien (5) verbindet;
eine Leiterplatte (3), die oberhalb der mindestens zwei Batterien (5) angeordnet ist; und
mindestens eine Temperaturerfassungseinheit (1), umfassend eine Temperaturerfassungsstruktur und eine Lagerstruktur (13);
**dadurch gekennzeichnet, dass**
die Temperaturerfassungsstruktur einen Temperatursensor (11) und ein Wärmeleitpad (12) umfasst, der Temperatursensor (11) die Temperatur der oberen Abdeckung (52) erfasst und an der Lagerstruktur (13) angeordnet ist, das Wärmeleitpad (12) zwischen dem Temperatursensor (11) und der oberen Abdeckung (52) angeordnet ist, und die Lagerstruktur (13) den Temperatursensor (11) und die Leiterplatte (3) elektrisch verbindet und unter einer Wirkung von mindestens einer von der Leiterplatte (3) und der Sammelschiene (2) die Temperaturerfassungsstruktur so drückt, dass sie an die obere Abdeckung (52) anstößt.

2. Batteriemodul nach Anspruch 1, **dadurch gekennzeichnet, dass** die Lagerstruktur (13) mit der Sammelschiene (2) geklemmt ist.

3. Batteriemodul nach Anspruch 1 oder 2, **dadurch gekennzeichnet, dass** die Lagerstruktur (13) einen Lagerkörper (131) umfasst, der Temperatursensor (11) an dem Lagerkörper (131) angeordnet ist und der Lagerkörper (131) mit einer ersten Klemmstruktur bereitgestellt ist, die Sammelschiene (2) mit einer zweiten Klemmstruktur bereitgestellt ist und die erste Klemmstruktur mit der zweiten Klemmstruktur übereinstimmt.

4. Batteriemodul nach Anspruch 3, **dadurch gekennzeichnet, dass** die zweite Klemmstruktur eine Montagenut (21) aufweist, der Lagerkörper (131) in der Montagenut (21) aufgenommen ist, und die erste Klemmstruktur eine Klemmnut (13b) umfasst, und eine Wand der Montagenut (21) in die Klemmnut (13b) geklemmt ist.

5. Batteriemodul nach Anspruch 3 oder 4, **dadurch gekennzeichnet, dass** die erste Klemmstruktur ferner eine Schnalle (13c) umfasst, die zweite Klemmstruktur ferner eine an der Wand der Montagenut (21) angeordnete Begrenzungsöffnung (22) umfasst und die Schnalle (13c) in die Begrenzungsöffnung (22) geklemmt ist.

6. Batteriemodul nach einem der Ansprüche 1-5, **dadurch gekennzeichnet, dass** die Lagerstruktur (13) mit einer Begrenzungsnut (13a) versehen ist und der Temperatursensor (11) in der Begrenzungsnut (13a) angeordnet ist.

7. Batteriemodul nach einem der Ansprüche 1-6, **dadurch gekennzeichnet, dass** die Lagerstruktur (13) einen Lagerkörper (131) und eine elastische Folie (133) umfasst, wobei der Temperatursensor (11) und die elastische Folie (133) beide auf dem Lagerkörper (131) angeordnet sind, und die elastische Folie (133) über dem Temperatursensor (11) angeordnet ist.

8. Batteriemodul nach Anspruch 7, **dadurch gekennzeichnet, dass** die elastische Folie (133) mit einem ersten Ende (133a) und einem zweiten Ende (133b) bereitgestellt ist, die einander gegenüberliegen, wobei das erste Ende (133a) elektrisch mit der Leiterplatte (3) verbunden ist und das zweite Ende (133b) elektrisch mit dem Temperatursensor (11) verbunden ist.

9. Batteriemodul nach Anspruch 8, **dadurch gekennzeichnet, dass** es ferner eine metallische Folie (4) umfasst, die auf der Leiterplatte (3) angeordnet ist, und das erste Ende (133a) durch die metallische Folie (4) elektrisch mit der Leiterplatte (3) verbunden ist.

10. Batteriemodul nach Anspruch 9, **dadurch gekennzeichnet, dass** das erste Ende (133a) nach unten konkav und bogenförmig ist und die metallische Folie (4) zwischen einer unteren Fläche des ersten Endes (133a) und dem Lagerkörper (131) eingesetzt ist.

11. Batteriemodul nach Anspruch 10, **dadurch gekennzeichnet, dass** zwischen der unteren Fläche des ersten Endes (133a) und dem Lagerkörper (131) ein Spalt (h) ausgebildet ist und der Spalt (h) kleiner oder gleich einer Dicke der metallischen Folie (4) ist.

12. Batteriemodul nach einem der Ansprüche 9-11, **dadurch gekennzeichnet, dass** das erste Ende (133a) mit einem von einem konvexen Teil (133c) und einem konkaven Teil (41) bereitgestellt ist, die metallische Folie (4) mit dem anderen von dem konvexen Teil (133c) und dem konkaven Teil (41) bereitgestellt ist und der konvexe Teil (133c) mit dem konkaven Teil (41) geklemmt ist.

13. Batteriemodul nach einem der Ansprüche 8-12, **dadurch gekennzeichnet, dass** die elastische Folie (133) innerhalb des Lagerkörpers (131) angeordnet ist und eine obere Fläche des Lagerkörpers (131) mit einer Öffnung (13d) zum Freilegen des ersten Endes (133a) bereitgestellt ist.

14. Vorrichtung, **dadurch gekennzeichnet, dass** sie das Batteriemodul nach einem der Ansprüche 1-13 umfasst, wobei das Batteriemodul so konfiguriert ist, dass es elektrische Energie bereitstellt.

## Revendications

1. Module de batterie, comprenant :
au moins deux batteries (5) disposées côte à côte, et chaque batterie (5) comprenant un couvercle supérieur (52) et une borne d'électrode disposée sur le couvercle supérieur (52) ;
une barre omnibus (2), connectant les bornes d'électrodes de batteries adjacentes (5) ;
une carte de circuit imprimé (3), disposée au-dessus des au moins deux batteries (5) ; et
au moins une unité de collecte de température (1), comprenant une structure de collecte de température et une structure de support (13) ;
**caractérisé en ce que**,
la structure de collecte de température comprend un capteur de température (11) et un tampon conducteur thermique (12), le capteur de température (11) collecte la température du couvercle supérieur (52) et est disposé sur la structure de support (13), le tampon conducteur thermique (12) est disposé entre le capteur de température (11) et le couvercle supérieur (52), et la structure de support (13) connecte électriquement le capteur de température (11) et la carte de circuit imprimé (3), et presse, sous l'effet d'au moins l'une de la carte de circuit imprimé (3) et de la barre omnibus (2), la structure de collecte de température pour qu'elle soit en butée contre le couvercle supérieur (52).

2. Module de batterie selon la revendication 1, **caractérisé en ce que** la structure de support (13) est serrée avec la barre omnibus (2).

3. Module de batterie selon la revendication 1 ou 2, **caractérisé en ce que** la structure de support (13) comprend un corps de support (131), le capteur de température (11) est disposé sur le corps de support (131), et le corps de support (131) est doté d'une première structure de serrage, la barre omnibus (2) est dotée d'une seconde structure de serrage, et la première structure de serrage est adaptée à la seconde structure de serrage.

4. Module de batterie selon la revendication 3, **caractérisé en ce que** la seconde structure de serrage comprend une rainure d'installation (21), le corps de support (131) est logé dans la rainure d'installation (21), et la première structure de serrage comprend une rainure de serrage (13b), et une paroi de la rainure d'installation (21) est serrée dans la rainure de serrage (13b).

5. Module de batterie selon la revendication 3 ou 4, **caractérisé en ce que** la première structure de serrage comprend également une boucle (13c), la seconde structure de serrage comprend également une ouverture de limitation (22) agencée sur la paroi de la rainure d'installation (21), et la boucle (13c) est serrée dans l'ouverture de limitation (22).

6. Module de batterie selon l'une quelconque des revendications 1 à 5, **caractérisé en ce que** la structure de support (13) est dotée d'une rainure de limitation (13a), et le capteur de température (11) est disposé dans la rainure de limitation (13a).

7. Module de batterie selon l'une quelconque des revendications 1 à 6, **caractérisé en ce que** la structure de support (13) comprend un corps de support (131) et une feuille élastique (133), dans lequel le capteur de température (11) et la feuille élastique (133) sont tous deux disposés sur le corps de support (131), et la feuille élastique (133) est disposée au-dessus du capteur de température (11).

8. Module de batterie selon la revendication 7, **caractérisé en ce que** la feuille élastique (133) est dotée d'une première extrémité (133a) et d'une seconde extrémité (133b) qui sont opposées l'une à l'autre, dans lequel la première extrémité (133a) est connectée électriquement à la carte de circuit imprimé (3), et la seconde extrémité (133b) est connectée électriquement au capteur de température (11).

9. Module de batterie selon la revendication 8, **caractérisé en ce qu'**il comprend également une feuille métallique (4) disposée sur la carte de circuit imprimé (3), et la première extrémité (133a) est connectée électriquement à la carte de circuit imprimé (3) par l'intermédiaire de la feuille métallique (4).

10. Module de batterie selon la revendication 9, **caractérisé en ce que** la première extrémité (133a) est concave vers le bas et est en forme d'arc, et la feuille métallique (4) est insérée entre une surface inférieure de la première extrémité (133a) et le corps de support (131).

11. Module de batterie selon la revendication 10, **caractérisé en ce qu'**un espace (h) est formé entre la surface inférieure de la première extrémité (133a) et le corps de support (131), et l'espace (h) est inférieur ou égal à une épaisseur de la feuille métallique (4).

12. Module de batterie selon l'une quelconque des revendications 9 à 11, **caractérisé en ce que** la première extrémité (133a) est dotée de l'une parmi une partie convexe (133c) et une partie concave (41), la feuille métallique (4) est dotée de l'autre partie parmi la partie convexe (133c) et la partie concave (41), et la partie convexe (133c) est serrée avec la partie concave (41).

13. Module de batterie selon l'une quelconque des revendications 8 à 12, **caractérisé en ce que** la feuille élastique (133) est disposée à l'intérieur du corps de support (131), et une surface supérieure du corps de support (131) est dotée d'une ouverture (13d) pour exposer la première extrémité (133a).

14. Dispositif, **caractérisé en ce qu'**il comprend le module de batterie selon l'une quelconque des revendications 1 à 13, dans lequel le module de batterie est configuré pour fournir de l'énergie électrique.
